# EUROPEAN PATENT SPECIFICATION

(11) **EP 1 368 405 B1**
(45) Date of publication and mention of the grant of the patent: **27.04.2005**
(21) Application number: 02712108.6
(22) Date of filing: 21.02.2002
(51) Int. Cl.: C08G 63/692

(54) **FLAME RETARDANT POLYESTER FILM**
FLAMMGEHEMMTER POLYESTER FILM
FILM POLYESTER RETARDATEUR DE FLAMME

(30) Priority: 21.02.2001 GB 0104277
(43) Date of publication of application: 10.12.2003
(73) Proprietor: Dupont Teijin Films U.S. Limited Partnership, Wilmington, Delaware 19805 (US)
(72) Inventor: MACDONALD, William, Alasdair, Cleveland TS14 8JX (GB); MORTLOCK, Simon, Vernon, Dumfries DG2 7SQ (GB)
(74) Representative: Cockerton, Bruce Roger
(86) International application number: PCT/GB2002/000769
(87) International publication number: WO 2002/066538

(56) References cited:
- US-A- 4 157 436
- US-A- 5 530 088
- CHANG S-J ET AL: "CHARACTERIZATIONS FOR BLENDS OF PHOSPHORUS-CONTAINING COPOLYESTER WITH POLY(ETHYLENE TEREPHTHALATE)" POLYMER ENGINEERING & SCIENCE, SOCIETY OF PLASTICS ENGINEERS, US, vol. 38, no. 9, September 1998 (1998-09), pages 1471-1481, XP000848895 ISSN: 0032-3888
- WANG C S ET AL: "Synthesis and properties of phosphorus-containing PEN and PBN copolyesters" POLYMER, ELSEVIER SCIENCE PUBLISHERS B.V, GB, vol. 40, no. 3, 1 February 1999 (1999-02-01), pages 747-757, XP004145588 ISSN: 0032-3861
- S.J.CHANG: POLYM.DEGRADAT.STABIL., vol. 54, no. 2-3, 1996, pages 365-371, XP001071224

## Description

This invention relates to the use of phosphorus-containing flame retardant polyesters for providing thermal stability and flame retardancy to an article.

Most polymeric materials used in construction, textiles, famishing and electrical applications are flammable and there is a strong desire to decrease the combustibility of materials and to render the materials safer in use. The most common approach is to add one or more flame retardant elements to the flammable polymer system but in turn these can cause other problems. Commonly these additives are based on antimony or bromine compounds, but there is an increasing environmental pressure to avoid flame retardant chemicals of this type. Halogen-containing flame retardants for example can release toxic fumes when exposed to high temperatures. Furthermore these chemicals often have to be added at loadings of 10-20%. The use of known flame retardants at such high levels can adversely affect subsequent processing and/or the physical properties of the compounded polymer composition.

Flame retardants which are non-halogenated and which are substantially antimony-free are known. Aromatic phosphate oligomers, such as resorcinol bisdiphenyl phosphate (RDP), have been used at various concentrations as flame retardants in polymer compositions, including poly(butylene terephthalate) (PBT), as described in European Patent Applications EP-A-0491986 and EP-A-0685518. Melamine pyrophosphate (MPP) is also known to be useful as a flame retardant in polyester compositions, as described in US-4278591, US-5618865 and US-5708065. JP-A-09/111100 discloses aromatic organophosphorus compounds of formula [(ArO)₂P(O)O]₂X (Ar = phenyl, optionally substituted; X = phenylene, naphthalene or biphenylene, optionally substituted) and their use in the preparation of polyester films.

The incorporation of a phosphorus-containing flame retardant into the polymer chain is also known. In contrast to the simple physical blending of the additive with the polymer, the flame retardant is copolymerised with the other polymer-forming monomeric components during polymer synthesis. The copolymerisation method minimises the tendency of the flame retardant to "bleed out" or migrate to the surface of the article formed from the polymer composition. The copolymerisation method of providing flame retardant polyester is disclosed, for instance, in JP-A-05/051441, JP-A-05/051440 and JP-A-62/277429.

However, there are a number of problems associated with the incorporation of a phosphorus-containing flame retardant component into a polymer backbone. Firstly, the phosphorus-containing monomer may not be stable at the temperatures experienced during the synthesis of the copolymer. Secondly, the physical properties of the resultant phosphorus-containing copolymer itself may be adversely affected. For instance, the resultant copolymer may not be stable at the processing temperatures used to manufacture an article from this copolymer. Thirdly, although the flame retardancy of an article made from the phosphorus-containing copolyester may be improved, other physical properties of such an article may be adversely affected. For instance, it has been shown that the presence of a phosphorus-containing component in the copolymer can lower the hydrolysis resistance of articles made from such a copolymer (Sato et al., J. Applied Polymer Sci., 2000,78, pp1134-1138).

There have been a number of disclosures which address these problems by providing phosphorus-containing monomeric compounds which are incorporated into the polymer backbone such that the phosphorus-containing group is pendant to the main polymer backbone rather than incorporated within the main chain of the polymer backbone. US-4157436 discloses that this subset of phosphorus-containing compounds not only has greater heat-stability at the temperatures experienced during copolymer synthesis, but also imparts greater heat-stability to the copolymer itself during subsequent product manufacture. It is stated in US-4157436 that this subset of phosphorus-containing compounds do not cause chain degradation in, or lower the degree of polymerisation of, the copolymer during subsequent processing, which is evident by the improved colour of the products manufactured from the copolymer.

US-5650531 discloses the synthesis of flame retardant phosphorus-containing polyester oligomers having pendant phosphorus-containing groups, and the use thereof in fibre production. The oligomers disclosed therein have a thermal decomposition temperature higher than 350°C and are reported to possess heat-resistance during subsequent processing. US-5530088 discloses similar compounds but wherein the pendant phosphorus-containing group comprises a biphenyl group.

Sato *et al.* (*supra*) disclose that copolyester fibres wherein the phosphorus group is pendant to the main polymer backbone exhibit improved resistance to hydrolysis in comparison with copolyester fibres in which the phosphorus group is incorporated into the main chain of the polymer backbone.

There remains a need, however, for polyester articles which possess both flame retardancy and thermal stability. It is an object of this invention to provide a polyester article, and particularly a polyester film, having improved flame retardancy relative to a polyester article in which no flame retardant additive is present while maintaining thermal stability. It is a further object of the invention to provide a flame retardant polyester article, and particularly a polyester film, having improved thermal stability relative to a known flame retardant polyester article.

According to the present invention, there is provided the use of a copolyester of one or more dicarboxylic acid(s), one or more diol(s) and one or more copolymerisable phosphorus-containing flame retardant compound(s) wherein the phosphorus atoms are present in the copolyester in a group pendant to the polymer backbone, for the purpose of providing thermal stability and flame retardancy to oriented film made from said copolyester, wherein the thermal stability is measured in terms of the retention of ultimate tensile strength and/or elongation to break according to ASTM D882-88 in air at a temperature of 140°C over an extended period.

As used herein, the term "thermal stability" is intended to mean the thermal stability of the polymer in dry air, that is to say under substantially anhydrous conditions, wherein there is little or no degradation via the hydrolytic pathway.

The term "thermal stability" means the thermal stability of the polymer when exposed to temperatures of 140°C over an extended period. Thermal stability is measured in terms of retention of mechanical properties namely the change in ultimate tensile strength and/or % elongation, before and after ageing (i.e. exposure in air to temperatures above ambient temperatures). Thus, a thermally stable polyester article will retain, or suffer only minimal degradation to, its mechanical properties (particularly ultimate tensile strength and/or % elongation) upon exposure to air at temperatures above ambient temperature, as described above.

The copolyester of one or more dicarboxylic acid(s), one or more diol(s) and one or more copolymerisable phosphorus-containing flame retardant compound(s), which is hereinafter referred to as "the copolyester", is preferably a synthetic linear polyester. The copolyester may be obtained by condensing the dicarboxylic acid(s), the diol(s) and the copolymerisable phosphorus-containing flame retardant compound(s) according to conventional techniques well-known in the art.

The dicarboxylic acid component of the copolyester may be selected from any one or more suitable dicarboxylic acid(s) or their lower alkyl (up to 6 carbon atoms) diesters, e.g. terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid). Aromatic dicarboxylic acids are preferred, particularly terephthalic acid, naphthalic acid and isophthalic acid, and especially terephthalic acid.

The diol component of the copolyester may be selected from any one or more suitable glycol(s), particularly an aliphatic or cycloaliphatic glycol, e.g. ethylene glycol, 1,3-propanediol, 1,4-butanediol, neopentyl glycol and 1,4-cyclohexanedimethanol. An aliphatic glycol is preferred, preferably ethylene glycol.

Preferred copolyesters are derived from poly(ethylene terephthalate), poly(ethylene naphthalate), and copolyesters comprising ethylene isophthalate and ethylene terephthalate residues.

The copolymerisable phosphorus-containing flame retardant compound should contain end groups which enable it to be incorporated into the polymer backbone of the polyester, i.e. ester-forming functional groups such as hydroxy (OH) group(s) or carboxylic acid (COOH) group(s). In a preferred embodiment, two such functional groups are present. Since the phosphorus atom must be pendant to the polymer backbone, the phosphorus atom must not be present in a functional group which is capable of forming an ester with the diol or dicarboxylic monomers of the copolyester. For instance, if the copolymerisable flame retardant compound contains a hydroxy group then the hydroxy group must not be located on a phosphorus but should be present in the form of a -C(OH) group. In this way, it should not be possible to form a P-ester moiety within the polymer backbone of the copolyester.

In a preferred embodiment, the copolymerisable phosphorus-containing flame retardant compound is selected from compounds of formula (I): 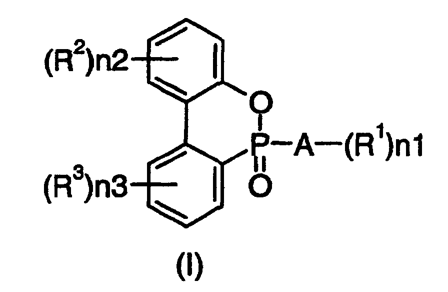 wherein:
R¹ is an ester-forming group selected from -COOR⁴, -OR⁵ and -OCOR⁶;
R² and R³ are independently selected from halogen atoms, hydrocarbon groups having 1-10 carbon atoms and R¹;
R⁴ is a hydrogen atom, a carbonyl group or a hydrocarbon group having 1-10 carbon atoms which may contain a hydroxyl group or a carboxyl group;
R⁵ is a hydrogen atom or a hydrocarbon group having 1-10 carbon atoms which may contain a hydroxyl group or a carboxyl group;
R⁶ is a hydrocarbon group having 1-10 carbon atoms which may contain a hydroxyl group or a carboxyl group;
A is a divalent or trivalent hydrocarbon group having 1-8 carbon atoms;
n1 is 1 or 2; and
n2 and n3 are each 0,1, 2, 3 or 4,
particularly wherein said compound contains two ester-forming functional groups.

Compounds of formula (I) can be produced, for example, by reacting 9,10-dihydro-9-oxa-10-phosphaphenanthrene-10-oxide (DOP), or its benzene nucleus- substituted analogue, with an unsaturated compound having an ester-forming functional group, or by esterifying with a diol or a dicarboxylic acid at the same time as or after the above-mentioned reaction. Said unsaturated compound is preferably a dicarboxylic acid such as maleic acid, fumaric acid, itaconic acid, acrylic acid, methacrylic acid, mesaconic acid, citraconic acid, glutaconic acid etc, or an anhydride or ester thereof, but oxycarboxylic acids such as brantenolic acid or unsaturated glycols such as 2-butene-1,4-diol and 3-butene-1,2-diol may also be used. In a preferred embodiment, the unsaturated compound is itaconic acid or the lower alkyl esters or anhydride thereof.

DOP or its benzene nucleus-substituted analogues can be synthesised from 2-hydroxybiphenyl or its nucleus-substituted analogues and phosphorus trichloride, as shown in Japanese Pat. No. 45397/1974. To produce the phosphorus-containing compounds of formula (I), it is particularly preferable to use the compound having no substituent group at the benzene nuclei (i.e. DOP), corresponding to the compound of formula (I) wherein n2 and n3 are both zero. In the reaction between DOP (or its benzene nucleus-substituted analogues), and the above-mentioned unsaturated compound, it is preferable to react them so that the molar ratio of the former to the latter is about 1:1, but it is also possible to use any one of them in some excess.

For example, using DOP and dimethyl itaconate as the starting compounds, the process for producing the phosphorus-containing compounds is as follows: after the starting compounds are mixed at room temperature, the mixture is heated under stirring at a temperature above 100°C, preferably between 120° and 200°C, under an inert gas atmosphere. A metal alkoxide such as sodium methoxide, sodium ethoxide, potassium ethoxide etc., may be used as a catalyst to increase the reaction speed. In order to suppress any side-reaction, a lower alcohol such as methanol, ethanol, isopropanol, n-butanol, etc. may be present in the reaction system.

In one embodiment, R¹ is selected from a carboxyl group, an alkyl ester of a carboxyl group having 1-7 carbon atoms, a cycloalkyl ester, an aryl ester, a hydroxyl group, a hydroxyalkoxycarbonyl group having 1-7 carbon atoms and a group represented by 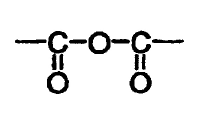 and n1 is preferably 2. When n1 is 2, each R¹ may be the same or different. R² and R³ are preferably selected from halogen (preferably chlorine or bromine); an alkyl group having 1-6 carbon atoms, a cycloalkyl group, an aryl group and the above-mentioned monovalent groups of R¹. The group A is preferably selected from lower alkylene groups such as methylene, ethylene, 1,2-propylene, 1,3-propylene, etc.; arylene groups such as 1,3-phenylene, 1,4-phenylene, etc.; divalent groups having arylene such as 1,3-xylylene, 1,4-xylylene, -(CH₂)-C₆H₄-, etc; a trivalent group represented by 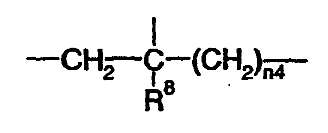 (wherein R⁸ stands for a hydrogen atom, or a lower alkyl group such as methyl, ethyl, etc., and n4 is 0 or 1) and 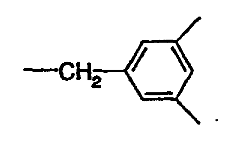 The above-mentioned hydrocarbon groups may be substituted by a halogen atom such as a chlorine atom, a bromine atom, etc.

Preferably A is a trivalent group. In a preferred embodiment, particularly wherein each R₁ is selected from -COOR⁴, A is the trivalent group:

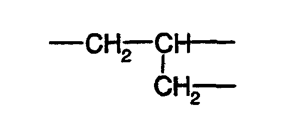

In a particularly preferred embodiment, the phosphorous-containing flame retardant compound is:

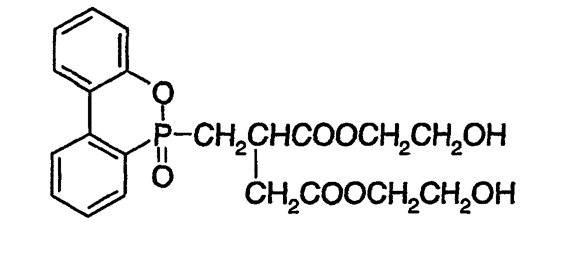

Further embodiments of suitable phosphorous-containing flame-retardant compounds, together with methods of syntheses thereof, are described in US-4157436 the disclosure of which is incorporated herein by reference.

The copolyester in which the phosphorus-containing flame retardant is incorporated may be synthesised by any method known in the art, including the methods described in US-4157436. The amount of flame retardant present in the copolyester, by weight of phosphorus relative to the weight of the copolyester, is preferably in the range from 0.05 to 2%, more preferably 0.1 to 1%, more preferably 0.2 to 0.8%, and most preferably 0.3 to 0.6%.

A polyester film obtainable from said copolyester is a self-supporting film, by which is meant a self-supporting structure capable of independent existence in the absence of a supporting base. The thickness of the film may vary over a wide range but preferably is within the range from 5 to 300 µm, more preferably 10 to 100 µm, particularly 12 to 50 µm, and especially 12 to 30 µm.

A polyester film may be produced by conventional techniques well-known in the art. Conveniently, formation of the film is effected by extrusion, in accordance with the procedure described below. In general terms the process comprises the steps of extruding a layer of molten polymer, quenching the extrudate and orienting the quenched extrudate in at least one direction.

The film may be uniaxially-oriented, but is preferably biaxially-oriented. Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties.

In a tubular process, simultaneous biaxial orientation may be effected by extruding a thermoplastics polyester tube which is subsequently quenched, reheated and then expanded by internal gas pressure to induce transverse orientation, and withdrawn at a rate which will induce longitudinal orientation.

In the preferred flat film process, the film-forming copolyester is extruded through a slot die and rapidly quenched upon a chilled casting drum to ensure that the copolyester is quenched to the amorphous state. Orientation is then effected by stretching the quenched extrudate in at least one direction at a temperature above the glass transition temperature of the copolyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Alternatively, the cast film may be stretched simultaneously in both the forward and transverse directions in a biaxial stenter. Stretching is effected to an extent determined by the nature of the polyester, for example polyethylene terephthalate is usually stretched so that the dimension of the oriented film is from 2 to 5, more preferably 2.5 to 4.5 times its original dimension in the or each direction of stretching. Typically, stretching is effected at temperatures in the range of 70 to 125°C. Greater draw ratios (for example, up to about 8 times) may be used if orientation in only one direction is required. It is not necessary to stretch equally in the machine and transverse directions although this is preferred if balanced properties are desired.

A stretched film may be, and preferably is, dimensionally stabilised by heat-setting under dimensional restraint at a temperature above the glass transition temperature of the copolyester but below the melting temperature thereof, to induce crystallisation of the copolyester. The actual heat-set temperature and time will vary depending on the composition of the film but should not be selected so as to substantially degrade the tear resistant properties of the film. Within these constraints, a heat-set temperature of about 135° to 250°C is generally desirable, as described in GB-A-838708.

The film may comprise one or more discrete layers wherein at least one, and preferably each, of the discrete layers comprises the aforementioned flame retardant copolyester. Each of the various layers may comprise polyesters of the dicarboxylic acid and diol components mentioned above. The polymeric materials of each of the various layers may be the same or different. A multi-layer film may comprise one, two, three, four or five or more layers and typical multi-layer structures may be of the AB, ABA, ABC, ABAB, ABABA or ABCBA type. Preferably, the film comprises one or two layers, preferably only one layer.

Where the film comprises more than one layer, manufacture is conveniently effected by coextrusion, either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a multi-layer polyester film, which may be oriented and heat-set as hereinbefore described. Formation of a multi-layer film may also be effected by conventional lamination techniques, for example by laminating together a preformed first layer and a preformed second layer, or by casting, for example, the first layer onto a preformed second layer.

A multi-layer film may comprise a heat-sealable layer. The heat-sealable layer may be any layer capable of forming a heat-seal bond to the required surface, and such layers are well-known in the art. The polymer material of a heat-sealable layer should soften to a sufficient extent that its viscosity becomes low enough to allow adequate wetting for it to adhere to the surface to which it is being bonded. The heat-seal bond is effected by heating to soften the polymer material of the heat-sealable layer, and optionally applying pressure, without melting (or otherwise affecting the structure or compromising the structural integrity) of the substrate layer. Thus, the polymer of a heat-sealable layer should begin to soften at a temperature such that a heat-seal bond can be formed at a temperature which is less than the melting temperature of other layer(s) of the multi-layer film. In one embodiment, the polymer of a heat-sealable layer should begin to soften at a temperature such that the heat-seal bond can be formed at a temperature which is between about 5 and 50°C below, preferably between about 5 and 30°C below, and preferably at least about 10°C below the melting temperature of the polymer material of the other layer(s) of the multi-layer film.

A heat-sealable layer suitably comprises a polyester resin, particularly a copolyester resin derived from one or more dicarboxylic acid(s) or their lower alkyl (up to 14 carbon atoms) diesters with one or more glycol(s), particularly an aliphatic or cycloaliphatic glycol, preferably an aliphatic glycol, and more preferably an alkylene glycol. Suitable dicarboxylic acids include aromatic dicarboxylic acids such as terephthalic acid, isophthalic acid, phthalic acid, or 2,5-, 2,6- or 2,7-naphthalenedicarboxylic acid, and aliphatic dicarboxylic acids such as succinic acid, sebacic acid, adipic acid, azelaic acid, suberic acid or pimelic acid. Suitable glycol(s) include aliphatic diols such as ethylene glycol, diethylene glycol, triethylene glycol, propylene glycol, 1,3-butane diol, 1,4-butane diol, 1,5-pentane diol, 2,2-dimethyl-1,3-propane diol, neopentyl glycol and 1,6-hexane diol, and cycloaliphatic diols such as 1,4-cyclohexanedimethanol and 1,4-cyclohexane diol. Ethylene glycol or 1,4-butanediol is preferred.

Preferably, the heat-sealable layer comprises a copolyester (hereinafter referred to as the "heat-seal copolyester") derived from at least two dicarboxylic acids. In one embodiment, the heat-seal copolyester may be derived from an aliphatic diol and a plurality of aromatic dicarboxylic acids, particularly terephthalic acid and isophthalic acid. A preferred heat-seal copolyester is derived from ethylene glycol, terephthalic acid and isophthalic acid. The preferred molar ratios of the terephthalic acid component to the isophthalic acid component are in the range of from 50:50 to 90:10, preferably in the range from 65:35 to 85:15. In a preferred embodiment, the heat-seal copolyester is a copolyester of ethylene glycol with about 82 mole % terephthalate and about 18 mole % isophthalate. Other polymers may also be used, such as those described in the Applicant's co-pending UK Patent Application No. 0023927.7 the disclosure of which is incorporated herein by reference. Formation of the heat-seal copolyester is conveniently effected in known manner by condensation, or ester-interchange, at temperatures generally up to 275°C.

The thickness of a heat-seal layer is generally between about 1 and 30% of the thickness of the film. A heat-sealable layer may have a thickness of up to about 50 µm, preferably up to about 25µm, more preferably up to about 15µm, more preferably up to about 10µm, more preferably between about 0.5 and 6µm, and more preferably between about 0.5 and 4µm.

Formation of a heat-sealable layer may be effected by conventional techniques, for example by coating, by using conventional lamination techniques, or by casting the polymer of the heat-sealable layer onto a pre-formed substrate layer. Formation of a heat-sealable layer and a substrate layer is conveniently effected by co-extrusion as described herein. The coextruded sheet is stretched to effect molecular orientation of the substrate, and preferably heat-set, as hereinbefore described. For most polymers used in a heat-sealable layer, the conditions applied for stretching the substrate generally induce partial crystallisation of a heat-sealable polymer and it is therefore preferred to heat-set under dimensional restraint at a temperature selected to develop the desired morphology of a heat-sealable layer. In general, by effecting heat-setting at a temperature below the crystalline melting temperature of a heat-sealable polymer and permitting or causing the composite to cool, the heat-sealable polymer will remain essentially crystalline. Heat-setting at a temperature greater than the crystalline melting temperature of a heat-sealing polymer, will produce an essentially amorphous heat-sealable polymeric layer. Thus, heat-setting a composite sheet comprising a copolyester substrate and a copolyester heat-sealable layer at a temperature within a range of from 175 to 200°C generally yields a substantially crystalline heat-sealable layer. Using a temperature of from 200 to 250°C generally yields an essentially amorphous heat-sealable layer. Certain polymers suitable for use in a heat-sealable layer remain amorphous at all times.

The heat-sealable layer preferably exhibits a heat-seal strength, measured by sealing the layer to itself, in the range from 200 to 3000, more preferably 300 to 1500, and particularly 350 to 500 Nm⁻¹.

One or more of the layers of the film may conveniently contain any of the additives conventionally employed in the manufacture of polyester films. Thus, agents such as cross-linking agents, dyes, pigments, voiding agents, lubricants, anti-oxidants, radical scavengers, -UV absorbers-(as described in more detail below), thermal stabilisers, antiblocking agents, surface active agents, slip aids, optical brighteners, gloss improvers, prodegradents, viscosity modifiers and dispersion stabilisers may be incorporated as appropriate. In particular, a layer may comprise a particulate filler which can improve handling and windability during manufacture. The particulate filler may, for example, be a particulate inorganic filler or an incompatible resin filler or a mixture of two or more such fillers.

By an "incompatible resin" is meant a resin which either does not melt, or which is substantially immiscible with the polymer, at the highest temperature encountered during extrusion and fabrication of the film. The presence of an incompatible resin usually results in a voided layer, by which is meant that the layer comprises a cellular structure containing at least a proportion of discrete, closed cells. Suitable incompatible resins include polyamides and olefin polymers, particularly a homo- or co-polymer of a mono-alpha-olefin containing up to 6 carbon atoms in its molecule. Preferred materials include a low or high density olefin homopolymer, particularly polyethylene, polypropylene or poly-4-methylpentene-1, an olefin copolymer, particularly an ethylene-propylene copolymer, or a mixture of two or more thereof. Random, block or graft copolymers may be employed.

Particulate inorganic fillers include conventional inorganic fillers, and particularly metal or metalloid oxides, such as alumina, silica (especially precipitated or diatomaceous silica and silica gels) and titania, calcined china clay and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the polyester.

Preferred particulate inorganic fillers include titanium dioxide and silica.

Titanium dioxide particles may be of anatase or rutile crystal form. The titanium dioxide particles preferably comprise a major portion of rutile, more preferably at least 60% by weight, particularly at least 80%, and especially approximately 100% by weight of rutile. The particles can be prepared by standard procedures, such as the chloride process or the sulphate process. The titanium dioxide particles may be coated, preferably with inorganic oxides such as aluminium, silicon, zinc, magnesium or mixtures thereof. Preferably the coating additionally comprises organic compound(s), such as fatty acids and preferably alkanols, suitably having from 8 to 30, preferably from 12 to 24 carbon atoms. Polydiorganosiloxanes or polyorganohydrogensiloxanes, such as polydimethylsiloxane or polymethylhydrogensiloxane are suitable organic compounds. The coating is suitably applied to the titanium dioxide particles in aqueous suspension. The inorganic oxides are precipitated in aqueous suspension from water-soluble compounds such as sodium aluminate, aluminium sulphate, aluminium hydroxide, aluminium nitrate, silicic acid or sodium silicate. The coating layer on the titanium dioxide particles is preferably in the range from 1 to 12% of inorganic oxides, and preferably in the range from 0.5 to 3% of organic compound, by weight based upon the weight of titanium dioxide.

The inorganic filler should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 5 µm, more preferably 0.05 to 1.5 µm, and particularly 0.15 to 1.2 µm.

The size distribution of the inorganic filler particles is also an important parameter, for example the presence of excessively large particles can result in the film exhibiting unsightly 'speckle', i.e. where the presence of individual filler particles in the film can be discerned with the naked eye. It is preferred that none of the inorganic filler particles should have an actual particle size exceeding 30 µm. Particles exceeding such a size may be removed by sieving processes which are known in the art. However, sieving operations are not always totally successful in eliminating all particles greater than a chosen size. In practice, therefore, the size of 99.9% by number of the inorganic filler particles should not exceed 30 µm, preferably should not exceed 20 µm, and more preferably should not exceed 15 µm. Preferably at least 90%, more preferably at least 95% by volume of the inorganic filler particles are within the range of the volume distributed median particle diameter ± 0.8 µm, and particularly ± 0.5 µm.

Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

The components of the composition of a layer may be mixed together in a conventional manner. For example, by mixing with the monomeric reactants from which the layer polymer is derived, or the components may be mixed with the polymer by tumble or dry blending or by compounding in an extruder, followed by cooling and, usually, comminution into granules or chips. Masterbatching technology may also be employed.

A film may be optically clear, preferably having a % of scattered visible light (haze) of <10%, preferably <6%, more preferably <3.5 % and particularly <2%, measured according to the standard ASTM D 1003. In this embodiment, filler is typically present in only small amounts, generally not exceeding 0.5% and preferably less than 0.2% by weight of a given layer.

In an alternative embodiment, the film is opaque and highly filled, preferably exhibiting a Transmission Optical Density (TOD) (Sakura Densitometer; type PDA 65; transmission mode) in the range from 0.1 to 2.0, more preferably 0.2 to 1.5, more preferably from 0.25 to 1.25, more preferably from 0.35 to 0.75 and particularly 0.45 to 0.65. The film is conveniently rendered opaque by incorporation into the polymer blend of an effective amount of an opacifying agent. Suitable opacifying agents include an incompatible resin filler, a particulate inorganic filler or a mixture of two or more such fillers, as hereinbefore described. The amount of filler present in a given layer is preferably in the range from 1% to 30%, more preferably 3% to 20%, particularly 4% to 15%, and especially 5% to 10% by weight, based on the weight of the layer polymer.

The surface of an opaque film preferably exhibits a whiteness index, measured as herein described, in the range from 60 to 120, more preferably 80 to 110, particularly 90 to 105, and especially 95 to 100 units.

Particularly improved aesthetic appearance occurs when the external surface of a film is matt, preferably exhibiting a 60° gloss value, measured as herein described, of less than 60%, more preferably in the range from 5% to 55%, particularly 20% to 50%, and especially 35% to 45%.

A film may also comprise a "slip coating" in order to improve the handling and windability of the film. A suitable slip coating may be, for instance a discontinuous layer of an acrylic and/or methacrylic polymeric resin optionally further comprising a cross-linking agent, such as described in EP-A-0408197 the disclosure of which is incorporated herein by reference. An alternative slip coating may comprise a potassium silicate coating, for instance as disclosed in US Patent Nos. 5925428 and 5882798, the disclosures of which are incorporated herein by reference. In a composite film comprising a heat-sealable layer, the slip coating is located on the opposite side of the film to the heat-sealable layer.

Preferably, the copolyester or one or more layers of a film comprising said copolyester contains a UV absorber. Polyester generally exhibits a lack of stability to UV radiation. This lack of stability manifests itself in a yellowing, hazing and cracking of the polyester on exposure to sunlight, which has limited the potential use of the film in an outdoor environment. It is known to increase the stability of polyesters to UV light by the incorporation therein of a UV absorbing material. A UV absorber has an extinction coefficient much higher than that of the relevant polymer such that most of the incident UV light is absorbed by the UV absorber rather than by the polymer. The UV absorber generally dissipates the absorbed energy as heat, thereby avoiding degradation of the polymer chain. As a consequence, the stability of the polymer to UV light is increased. For certain applications it is desirable to have films which exhibit flame retardancy, thermal stability and UV stability, but at the same time retain the properties such as mechanical properties, strength and clarity that are associated with conventional films which do not contain flame retardants and UV stabilisers.

In principle, any organic or inorganic UV absorber suitable for use with polyester may be employed in the present invention. Suitable examples include the organic UV absorbers disclosed in Encyclopaedia of Chemical Technology, Kirk-Othmer, Third Edition, John Wiley & Sons, Volume 23, Pages 615 to 627. Particular examples of UV absorbers include benzophenones, benzotriazoles (US-4684679, US-4812498 and US-4681905), benzoxazinones (US-4446262, US-5251064 and US-5264539) and triazines (US-3244708, US-3843371, US-4619956, US-5288778 and WO 94/05645). The teaching of the aforementioned documents is incorporated herein by reference.

In one embodiment of the invention, the UV absorber may be chemically incorporated in the polyester chain. Such UV-stable polyesters may be produced by incorporating a benzophenone into the polyester, for example as described in EP-A-0006686, EP-A-0031202, EP-A-0031203 and EP-A-0076582, the teaching of which is incorporated herein by reference.

Triazines are preferred UV absorbers, more preferably hydroxyphenyltriazines, and particularly hydroxyphenyltriazine compounds of formula (II): 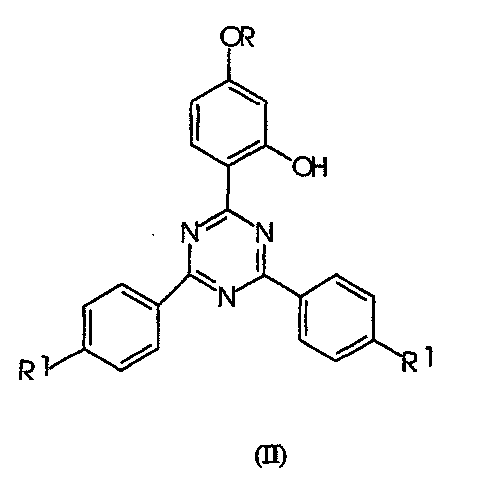 wherein R is hydrogen, C₁-C₁₈ alkyl, C₂-C₆ alkyl substituted by halogen or by C₁-C₁₂ alkoxy, or is benzyl and R¹ is hydrogen or methyl. R is preferably C₁-C₁₂ alkyl or benzyl, more preferably C₃-C₆ alkyl, and particularly hexyl. R¹ is preferably hydrogen. An especially preferred UV absorber is 2-(4,6-diphenyl-1,3,5-triazin-2-yl)-5-(hexyl)oxy-phenol, which is commercially available as Tinuvin™ 1577 FF from Ciba-Additives.

Suitable inorganic UV absorbers include metal oxide particles, such as zinc oxide or titanium dioxide, having a mean crystal size, as determined by electron microscopy, of less than 200 nm, more preferably in the range from 5 to 150 nm, particularly 10 to 100 nm, and especially 15 to 40 nm. Titanium dioxide particles, as already described herein, are particularly preferred.

The amount of UV absorber is preferably in the range from 0.1% to 10%, more preferably 0.2% to 7%, more preferably 0.6% to 4%, particularly 0.8% to 2%, and especially 0.9% to 1.2% by weight, relative to the weight of the copolyester composition.

In one embodiment of the invention, both an organic UV absorber, preferably a triazine, and an inorganic UV absorber, preferably titanium dioxide, are present in the polyester substrate. The ratio, by weight of inorganic to organic UV absorber is preferably in the range from 0.5 to 10:1, more preferably 1 to 5:1, and particularly 1.5 to 2.5:1.

The polyester films obtainable using the present invention have a variety of uses, for instance in screens, shades or wall coverings, in the manufacture of electrical components and circuits such as capacitors and flexible printed circuitry, membrane touch switches, and in the manufacture of components for use in the construction and transport industries.

The following test methods are used to determine certain properties of the polyester film:
(i) Haze is measured using a Hazegard System XL-211, according to ASTM D 1003-61.
(ii) 60° gloss value of the film surface is measured using a Dr Lange Reflectometer REFO 3 (obtained from Dr Bruno Lange, GmbH, Dusseldorf, Germany) according to DIN 67530.
(iii) Heat-seal strength of the heat-sealable layer is measured by positioning together and heating the heat-sealable layers of two samples of polyester film at 140°C for one second under a pressure of 275 kPa (40 psi). The sealed film is cooled to room temperature, and the heat-seal strength determined by measuring the force required under linear tension per unit width of seal to peel the layers of the film apart at a constant speed of 4.23 mm/second.
(iv) Thermal stability is tested by ageing a film sample (film strips 25.4 mm in width and 125 mm in length) in an oven at 140°C. Ultimate tensile strength (UTS) and elongation to break are measured on an Instron 4301 (jaw separation 50 mm) according to standard test ASTM D882-88. The UTS and elongation are measured for several samples aged for different time periods and expressed as a percentage of the original value.
(v) Flame retardancy is measured using a vertical burn test performed as follows:
   Test samples, 200 mm x 50 mm, were cut from each film sample and formed into tubes 200 mm long by 13 mm diameter. Two test samples from each film sample were used in the testing. There was no conditioning of the samples. A line was drawn 75 mm from the top of the tubes. Before flame application the top of each tube was held shut by a spring clamp which, with a stand, held the test sample vertical. Closing one end of the tube prevented chimney effects during flame application. A burner flame was adjusted to produce a blue flame 20 ±1mm. Continuous adjustment of the propane supply and the airport was necessary to achieve the correct height.
   The film tube was held vertically and the flame applied to the bottom of the tube 10 mm below the film. Flame application was for 3 seconds, maintaining the 10mm distance by moving the burner upwards as the film shrank away from it. After 3 seconds the flame was moved away from the sample and the duration (in seconds) of flaming after the first flame application noted (A). A repeat 3 second application was completed and the duration (in seconds) of flaming after the second flame application (B) and the duration (in seconds) of flaming plus glowing after the second flame application (C) noted. If a specimen burned to the 75 mm mark, observation D was yes. During the flame application if any drips of molten polymer fell from the sample, observation E was yes.

The invention is further illustrated by the following examples. It will be appreciated that the examples are for illustrative purposes only and are not intended to limit the invention as described above. Modification of detail may be made without departing from the scope of the invention.

### Examples

Phosphorus-containing polyethylene terephthalate copolyesters were prepared using a standard direct esterification reaction performed on a 70kg reactor. After water distillation, pressure let-down and stabiliser addition, the monomer was transferred to the polycondensation vessel. At this point, before the addition of china and clay and antimony catalyst, the phosphorus-containing flame retardant additive was fed in at monomer temperatures of 255-260°C. Three phosphorus-containing flame retardants were used to prepare three phosphorus-containing copolyesters, the amounts being as follows:

| | |
|---|---|
| Ukanol ES® (Example 1) | 8.65kg equivalent to 11wt% |
| Phosgard PF100® (Comparative Example 1) | 2.16kg equivalent to 3wt% |
| Exolit PE100® (Comparative Example 2) | 1.78kg equivalent to 2.4wt% |

Ukanol ES® is obtainable from Schill & Seilacher GmbH & Co. (Boblingen, Germany). Phosgard PF100® is obtainable from Solutia Inc. (St Louis, MO, USA). Exolit PE100® is obtainable from Clariant GmbH (Sulzbach, Germany).

The structures of Ukanol ES®, Phosgard PF100® and Exolit PE100® and Exolit are shown below as formulae (1), (2) and (3), respectively:

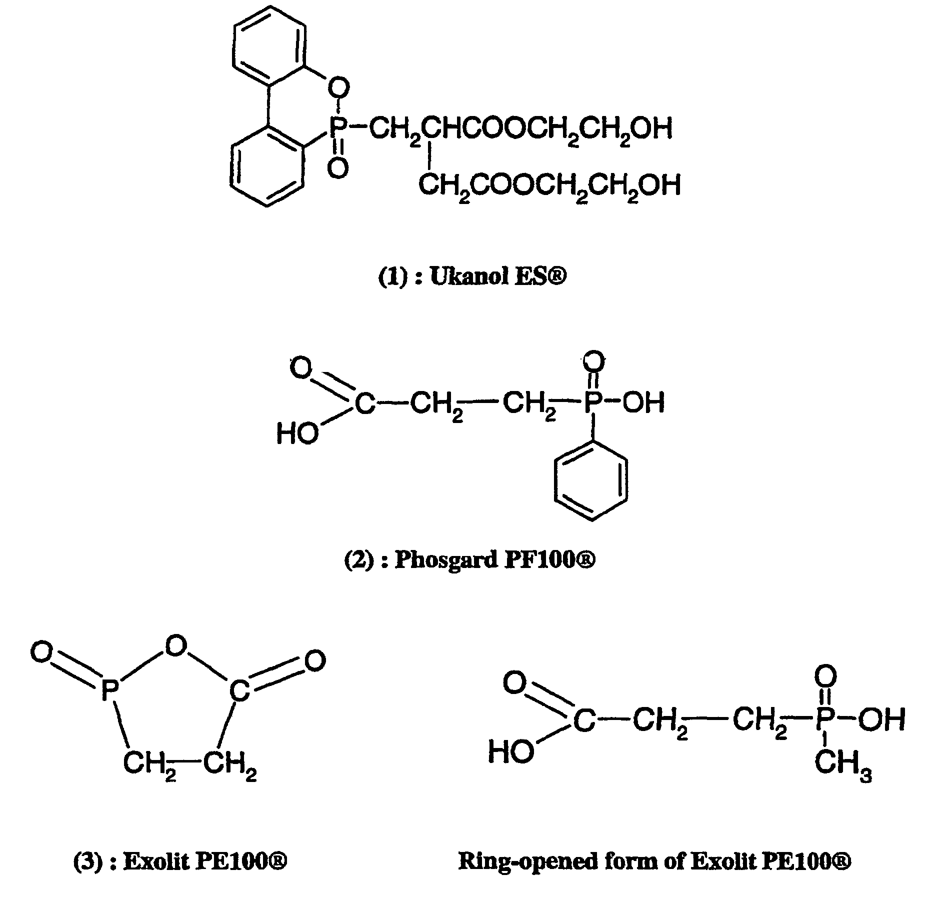

After stirring for 10 mins, the clay slurry was added and stirred for 5 mins, followed by addition of the antimony catalyst. Two minutes later vacuum was applied and after 30 mins the vacuum was less than 1 mm Hg and the contents at 280°C. A normal polymerisation ensued with about 60kg of polymer chip being collected. The phosphorus content of the resulting copolymers was from about 0.4 to 0.5% P by weight of the copolymer. The structures of the phosphorus-bound portions of the polymers are believed to be as shown below in formula (4) and (5) below:

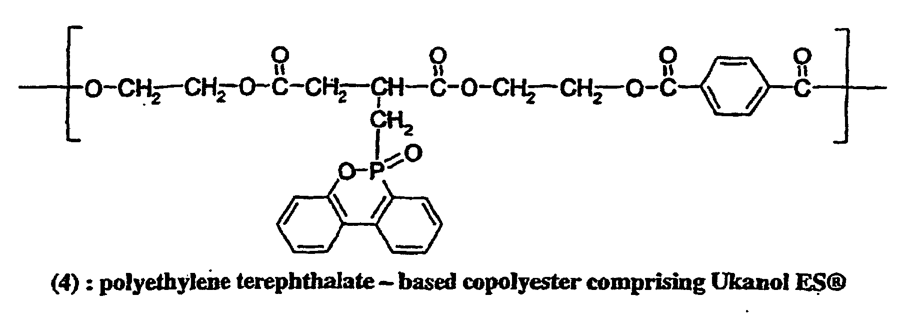

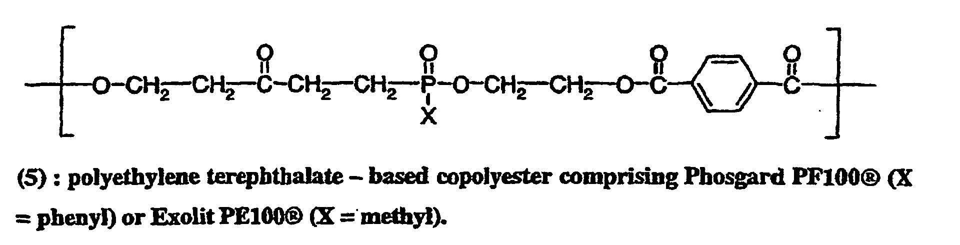

Before filming each polymer was blended with a 10 wt% Tinuvin 1577® masterbatch to give a loading of 1 wt%. Each polymer was fed undried to a vented twin screw extruder with extruder and melt pipe temperatures of 270°C, 5°C below standard PET temps. The extruded polymer was subjected to a forwards draw ratio of 3.2 (pre-heat temperature was 70°C; forward draw roll was 70°C) and a sideways draw ratio of 4.2 (pre-heat temperature was 80°C; sideways draw roll was 94°C). The film was then heat-set in a three-zone environment at temperatures of 220°C, 209°C and 200°C. The final film thickness was 17µm. Two samples of each film were subjected to a vertical burn test as described herein to assess its flame retardancy. The results are shown in Table 1.

**Table 1-**

| **Vertical burn test for 17 µm film** | | | | | |
|---|---|---|---|---|---|
| **Sample** | **A** | **B** | **C** | **D** | **E** |
| Example 1 (Ukanol) | nil | nil | nil | nil | yes |
| | nil | nil | nil | nil | yes |
| Comparative Example 1 (Phosgard) | nil | nil | nil | nil | yes |
| | nil | nil | nil | nil | yes |
| Comparative Example 2 (Exolit) | nil | nil | nil | nil | yes |
| | nil | nil | nil | nil | yes |

As expected, all three films self-extinguished after primary ignition and exhibited good flame retardancy.

The thermal stability of the films was measured as described herein. The elongation of the films is set out in Table 2A. The UTS of the films is set out in Table 2B. A film sample designated as Control 1 was also tested. The Control 1 film was a non-slow burn, mono-layer polyethylene terephthalate film of thickness 19 µm having no flame retardant therein. The Control 1 film is expected to show good thermal stability since it contains no P-ester linkages in the polymer backbone.

**Table 2A-**

| **Thermal Stability (Elongation)** | | | | | |
|---|---|---|---|---|---|
| **Sample** | **% Elongation** | | | | |
| | **0 Days** | **1 Day** | **2 Days** | **3 Days** | **6 Days** |
| Control 1 | 100 | 104 | 108 | 97 | 86 |
| Example 1 (Ukanol) | 100 | 100 | 110 | 100 | 91 |
| Comparative Example 1 (Phosgard) | 100 | 95 | 85 | 84 | 13 |
| Comparative Example 2 (Exolit) | 100 | 0 | 0 | 0 | 0 |

**Table 2B -**

| **Thermal stability (UTS)** | | | |
|---|---|---|---|
| | **% UTS** | | |
| **Sample** | **0 Days** | **7 Days** | **14 Days** |
| Control 1 | 100 | 90 | 78 |
| Example 1 (Ukanol) | 100 | 82 | 74 |
| Comparative Example 1 (Phosgard) | 100 | 59 | 45 |

The data in Tables 2A and 2B demonstrate that the thermal stability of a copolyester film wherein the polymer bound flame retardant is Ukanol is unexpectedly greater than the thermal stability of a copolyester film wherein the polymer-bound flame retardant is Phosgard or Exolit. The data in Table 2A also demonstrates that the thermal stability as measured by % elongation is unexpectedly comparable to that of the Control 1 film and, after 2 days, is actually greater than that of the Control 1 film.

Further examples of films containing the Ukanol-containing copolyester were made at different thicknesses and/or under different conditions of film manufacture, as described below.

### Example 2

A film was manufactured as described above for Example 1, using a forwards draw ratio of 3.2 (pre-heat temperature was 70°C; forward draw roll was 69°C) and a sideways draw at a ratio of 4.0 (pre-heat temperature was 79°C; sideways draw roll was 94°C). The film was then heat-set in a three-zone environment at temperatures of 219°C, 220°C and 200°C. The final film thickness was 17µm.

### Example 3

A film was manufactured as described above for Example 1, using a forwards draw ratio of 3.4 (pre-heat temperature was 78°C; forward draw roll was 78°C) and a sideways draw ratio of 3.6 (pre-heat temperature was 94°C; sideways draw roll was 105°C). The film was then heat-set in a three-zone environment at temperatures of 213°C, 200°C and 189°C. The final film thickness was 50µm.

### Example 4

A film was manufactured as described above for Example 1, using a forwards draw ratio of 3.4 (pre-heat temperature was 78°C; forward draw roll was 78°C) and a sideways draw ratio of 3.6 (pre-heat temperature was 94°C; sideways draw roll was 105°C). The film was then heat-set in a three-zone environment at temperatures of 215°C, 200°C and 189°C. The final film thickness was 75µm.
The results of the vertical burn test are shown in Table 3. Table 3 also shows the results for films designated as Controls 2 and 3, which have the same composition as the Control 1 film, but with thicknesses of 19 and 75 µm respectively.

**Table 3 -**

| **Vertical burn test for films of differing thicknesses** | | | | | | |
|---|---|---|---|---|---|---|
| **Sample** | **Thickness** | **A** | **B** | **C** | **D** | **E** |
| Example 2 (Ukanol) | 17 µm | nil | nil | nil | nil | yes |
| | | nil | nil | nil | nil | yes |
| Example 3 (Ukanol) | 50 µm | nil | nil | nil | nil | yes |
| | | nil | nil | nil | nil | yes |
| Example 4 (Ukanol) | 75 µm | nil | nil | nil | nil | yes |
| | | nil | nil | nil | nil | yes |
| Control 2 | 19 µm | 4 | 1 | 0 | nil | yes |
| | | 13 | 1 | 0 | nil | yes |
| Control 3 | 75 µm | 12 | 3 | 0 | nil | yes |
| | | 3 | 2 | 0 | nil | yes |

The data in Table 3 provide further evidence of the good flame retardancy of films comprising Ukanol-containing polyester in relation to a standard PET film which does not contain a flame retardant. The data also show that the flame retardant effect is observed at different thicknesses.

## Claims

1. The use of a copolyester of one or more dicarboxylic acid(s), one or more diol(s) and one or more copolymerisable phosphorus-containing flame retardant compound(s) wherein the phosphorus atom(s) are present in the copolyester in a group pendant to the polymer backbone, for the purpose of providing thermal stability and flame retardancy to an oriented film made from said copolyester, wherein the thermal stability is measured in terms of retention of ultimate tensile strength and/or elongation to break according to ASTM D882-88 in air at a temperature of 140°C over an extended period.

2. A use according to claim 1 wherein said film is a biaxially-oriented film.

3. A use according to claim 1 or 2 wherein said dicarboxylic acid is terephthalic acid.

4. A use according to claim 1, 2 or 3 wherein said diol is ethylene glycol.

5. A use according to any preceding claim wherein the copolymerisable phosphorus-containing flame retardant compound is a compound of formula (I): 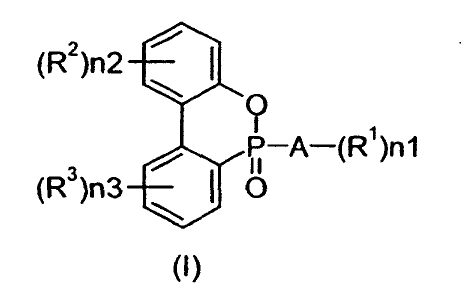 wherein:
R¹ is an ester-forming group selected from -COOR⁴, -OR⁵ and -OCOR⁶;
R² and R³ are independently selected from halogen atoms, hydrocarbon groups having 1-10 carbon atoms and R¹;
R⁴ is a hydrogen atom, a carbonyl group or a hydrocarbon group having 1-10 carbon atoms which may contain a hydroxyl group or a carboxyl group;
A is a divalent or trivalent hydrocarbon group having 1-8 carbon atoms;
n1 is 1 or 2; and
n2 and n3 are each 0, 1, 2, 3 or 4.

6. A use according to claim 5 wherein said compound of formula (I) contains two ester-forming functional groups.

7. A use according to claim 5 wherein the copolymerisable phosphorus-containing flame retardant compound is:

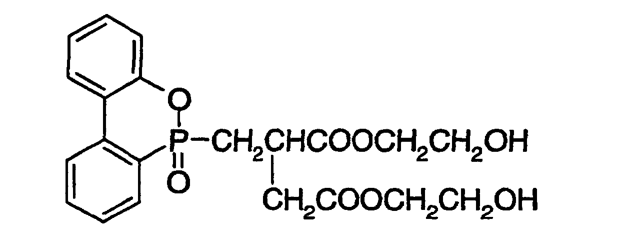

8. A use according to any preceding claim wherein the copolyester comprises from 0.05% to 2% by weight of phosphorus relative to the weight of the copolyester.

9. A use according to any preceding claim wherein the film self-extinguishes after ignition.

10. A use according to any preceding claim wherein the film comprises 0.1-10% by weight, relative to the weight of the polyester, of a UV absorber.

11. A use according to claim 9 wherein the UV absorber is selected from one or more of a triazine and a metal oxide.

## Patentansprüche

1. Die Verwendung eines Copolyesters aus einer oder mehreren Dicarbonsäure(n), einem oder mehreren Diol(en) und einer oder mehreren copolymerisierbaren phosphorhaltigen Flammschutzverbindung(en), wobei das/die Phosphoratom(e) in dem Copolyester in einer an der Polymerhauptkette anhängenden Gruppe vorliegt/vorliegen, um einer aus dem Copolyester erzeugten orientierten Folie thermische Stabilität und Flammschutzeigenschaft zu verleihen, wobei die thermische Stabilität gemessen wird in Form der Erhaltung der Zugfestigkeit und/oder Reißdehnung gemäß ASTM D882-88 in Luft über einen längeren Zeitraum bei einer Temperatur von 140°C.

2. Eine Verwendung gemäß Anspruch 1, wobei die Folie eine biaxial orientierte Folie ist.

3. Eine Verwendung gemäß Anspruch 1 oder 2, wobei die Dicarbonsäure Terephthalsäure ist.

4. Eine Verwendung gemäß Anspruch 1, 2 oder 3, wobei das Diol Ethylenglycol ist.

5. Eine Verwendung gemäß irgendeinem vorhergehenden Anspruch, wobei die copolymerisierbare phosphorhaltige Flammschutzverbindung eine Verbindung der Formel (I) ist: 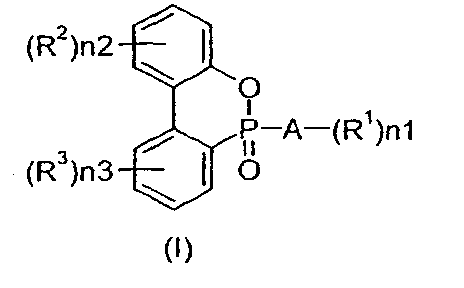 wobei:
R¹ eine esterbildende Gruppe ist, ausgewählt aus -COOR⁴, -OR⁵ und -OCOR⁶,
R² und R³ unabhängig ausgewählt sind aus Halogenatomen, Kohlenwasserstoffgruppen mit 1-10 Kohlenstoffatomen und R¹,
R⁴ ein Wasserstoffatom, eine Carbonylgruppe oder eine Kohlenwasserstoffgruppe mit 1-10 Kohlenstoffatomen ist, die eine Hydroxylgruppe oder eine Carboxylgruppe enthalten kann,
A eine bivalente oder trivalente Kohlenwasserstoffgruppe mit 1-8 Kohlenstoffatomen ist,
n1 1 oder 2 ist und
n2 und n3 jeweils 0, 1, 2, 3 oder 4 sind.

6. Eine Verwendung gemäß Anspruch 5, wobei die Verbindung der Formel (I) zwei esterbildende funktionelle Gruppen enthält.

7. Eine Verwendung gemäß Anspruch 5, wobei die copolymerisierbare phosphorhaltige Flammschutzverbindung ist:

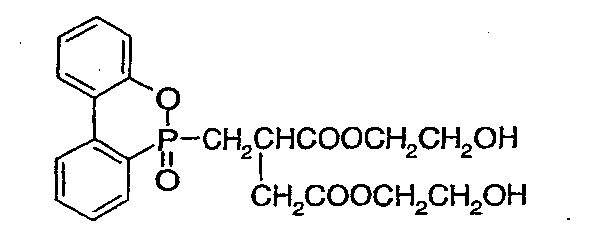

8. Eine Verwendung gemäß irgendeinem vorhergehenden Anspruch, wobei der Copolyester 0,05 Gew.-% bis 2 Gew.-% Phosphor enthält, bezogen auf das Gewicht des Copolyesters.

9. Eine Verwendung gemäß irgendeinem vorhergehenden Anspruch, wobei die Folie nach der Entflammung selbstlöschend ist.

10. Eine Verwendung gemäß irgendeinem vorhergehenden Anspruch, wobei die Folie 0,1-10 Gew.-% eines UV-Absorbers enthält, bezogen auf das Gewicht des Polyesters.

11. Eine Verwendung gemäß Anspruch 9, wobei der UV-Absorber ausgewählt ist aus einem oder mehreren von einem Triazin und einem Metalloxid.

## Revendications

1. Utilisation d'un copolyester d'un ou de plusieurs acides dicarboxyliques, d'un ou de plusieurs diols et d'un ou de plusieurs composés copolymérisables phosphorés ignifuges, dans laquelle le ou les atome(s) de phosphore est (sont) présent(s) dans le copolyester dans un groupe pendant au squelette du polymère, afin de conférer une stabilité thermique et une ininflammabilité à un film orienté constitué dudit copolyester, où la stabilité thermique est mesurée en termes de conservation de la résistance ultime à la traction et/ou d'étirement jusqu'au point de cassure, conformément à la norme ASTM D882-88, dans l'air et à une température de 140°C sur une période prolongée.

2. Utilisation selon la revendication 1, dans laquelle ledit film est un film orienté biaxialement.

3. Utilisation selon la revendication 1 ou 2, dans laquelle ledit acide dicarboxylique est l'acide téréphtalique.

4. Utilisation selon la revendication 1, 2 ou 3, dans laquelle ledit diol est l' éthylèneglycol.

5. Utilisation selon l'une quelconque des revendications précédentes, dans laquelle le composé copolymérisable phosphoré ignifuge est un composé de formule (I) : 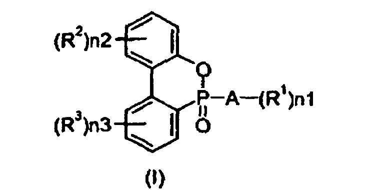 dans laquelle
R¹ est un groupe formant des esters choisi parmi -COOR⁴, -OR⁵ et -OCOR⁶ ;
R² et R³ sont indépendamment choisis parmi des atomes d'halogène, des groupes hydrocarbonés renfermant de 1 à 10 atomes de carbone et R¹ ;
R⁴ est un atome d'hydrogène, un groupe carbonyle ou un groupe hydrocarboné renfermant de 1 à 10 atomes de carbone pouvant contenir un groupe hydroxyle ou un groupe carboxyle ;
A est un groupe hydrocarboné bivalent ou trivalent renfermant de 1 à 8 atomes de carbone ;
n1 vaut 1 ou 2 ; et
n2 et n3 valent chacun 0, 1, 2, 3 ou 4.

6. Utilisation selon la revendication 5, dans laquelle ledit composé de formule (I) renferme deux groupes fonctionnels formant des esters.

7. Utilisation selon la revendication 5, dans laquelle le composé copolymérisable phosphoré ignifuge est :

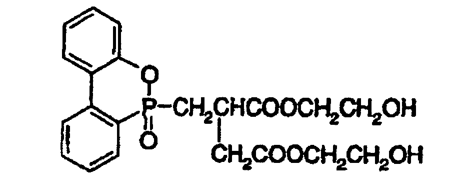

8. Utilisation selon l'une quelconque des revendications précédentes, dans laquelle le copolyester comprend de 0,05 % à 2 % en poids de phosphore par rapport au poids du copolyester.

9. Utilisation selon l'une quelconque des revendications précédentes, dans laquelle le film s'éteint de lui-même à la suite d'une inflammation.

10. Utilisation selon l'une quelconque des revendications précédentes, dans laquelle le film comprend de 0,1 à 10 % en poids d'un absorbant d'U.V. par rapport au poids du polyester.

11. Utilisation selon la revendication 9, dans laquelle l'absorbant d'U.V. est choisi parmi un ou plusieurs parmi une triazine et un oxyde métallique.
